# EUROPÄISCHE PATENTANMELDUNG

(11) **EP 1 959 119 A2**
(43) Veröffentlichungstag der Anmeldung: **20.08.2008**
(21) Anmeldenummer: 08001579.5
(22) Anmeldetag: 29.01.2008
(51) Int. Cl.: F02D 41/02, F02D 37/02, F01N 7/02

(54) **Verfahren und Vorrichtung zur Abgasnachbehandlung einer mit Erdgas betriebenen Brennkraftmaschine**

(30) Priorität: 16.02.2007 DE 102007008331
(71) Anmelder: Volkswagen Aktiengesellschaft, 38436 Wolfsburg (DE)
(72) Erfinder: Pott, Ekkehard, 38518 Gifhorn (DE); Degen, Alf, 38536 Meinersen (DE); Bergmann, Helge, 38126 Braunschweig (DE)

(57) **Zusammenfassung**

Die Erfindung betrifft ein Verfahren und eine Vorrichtung zur Abgasnachbehandlung einer mit Erdgas betriebenen Brennkraftmaschine mit einer Abgasanlage, welche einen Katalysator oder ein Katalysatorsystem aufweist, wobei eine Beheizung zumindest eines Katalysators erfolgt. Dabei wird nach einem erstmaligen Light-off des Katalysators oder des Katalysatorsystems bei einem Absinken einer Katalysatortemperatur unter eine, für eine ausreichende Methankonvertierung notwendige Mindesttemperatur Tₛₒₗₗ eine Momentenreserve für eine Beheizung zumindest eines Katalysators ermittelt. Die Momentenreserve wird aus einer Temperaturdifferenz ΔT zwischen einer ermittelten aktuellen Temperatur Tᵢₛₜ und einer Mindesttemperatur Tₛₒₗₗ des Katalysators ermittelt, wobei die Mindesttemperatur Tₛₒₗₗ aus einem Abgasmassenstrom und zumindest einem Alterungsparameter des Katalysators ermittelt wird.

## Beschreibung

Die Erfindung betrifft ein Verfahren und eine Vorrichtung zur Abgasnachbehandlung einer mit Erdgas betriebenen Brennkraftmaschine gemäß der Oberbegr ffe der Ansprüche 1 und 14.

Alternative Kraftstoffe, wie beispielsweise hoch verdichtetes Erdgas CNG (Compressed Natural Gas), haben in Hinblick auf die begrenzten Rohölreserven und die vom Gesetzgeber immer enger werdenden Grenzen der Schadstoffemission in letzter Zeit an Bedeutung gewonnen. Verbrennungsmotorisch interessant ist beispielsweise Erdgas vor allem wegen seiner hohen Oktanzahl und damit hohen Klopffestigkeit und relativ hohen Energiedichte. Ein weiterer Vorteil ist der im Vergleich zu Benzin niedrige Gehalt an Katalysatorgliten wie Phosphor und Schwefel und der im Vergleich zu Benzin oder Diesel geringe Kohlenstotfanteil. Erdgas hat somit gute Verbrennungseigenschaften bei geringem Schadstoffausstoß und verminderter CO₂-Emission. Die Abgase von CNG Brennkraftmaschinen enthalten als Kohlenwasserstoffe überwiegend Methan. Dieses Molekül ist chemisch außerordentlich stabil und benötigt daher eine höhere Temperatur und längere Zeit für eine HC-Konvertierung als die Abgasnachbehandlung von Benzin betriebenen Brennkraftmaschinen. Die Abgastemperaturen von mit CNG betriebenen Brennkraftmaschinen sind jedoch auf Grund des besseren thermischen Wirkungsgrades niedriger als die von mit Benzin betriebenen, so dass insbesondere das Anspringen bzw. Light-off-Verhalten des Katalysators und eine ausreichende Methankonvertierung im Schwachlastbetrieb mit resultierend niedrigen Abgastemperaturen einer CNG Brennkraftmaschine problematisch ist.

Um' eine für die Zulassung nach EU-Norm hinreichende Methankonvertierung zu erreichen, wird der Katalysator einer CNG Brennkraftmaschine möglichst moto nah angeordnet und weist eine relativ hohe Beladung mit Edelmetall, üblicherweise mehr als 150 g/ft³, auf. Durch derart hohe Edelmetallbeladungen soll das "Anspringen" des Katalysators zur Methankonvertierung bei niedrigen Abgastemperaturen auch bei gealterten Katalysatoren erreicht werden.

Neben diesen "Hardware"-Maßnahmen kann durch so genanntes Katalysatorheizen durch motorseitige Steuerungsmaßnahmen die Katalysatoraufheizung nach einem Motorkaltstart schnell auf die Light-off-Temperatur angehoben werden. Generell wird dazu im Erdgasbetrieb mager gestartet. Weitere Maßnahmen bestehen in einer Verbrennungsverschleppung sowie Erhöhung des Massendurchsatzes, wodurch jedoch der Kraftsoffverbrauch steigt und der Wirkungsgrad der Brennkraftmaschine sinkt.

Aufgabe der Erfindung ist es, eine ausreichende Methankonvertierung für mit Erdgas betriebene Brennkraftmaschinen für den gesamten Fahrzeugbetrieb und über die Fahrzeuglebensdauer mit geringem Aufwand zu realisieren.

Die Lösung der Aufgabe gelingt mit einem Verfahren zur Abgasnachbehandlung einer mit Erdgas betriebenen Brennkraftmaschine gemäß Anspruch 1 und einer Vorrichtung zur Abgasnachbehandlung einer mit Erdgas betriebenen Brennkraftmaschine gemäß Anspruch 14. Weitere vorteilhafte Ausgestaltungen finden sich in den abhängigen Ansprüchen.

Das erfindungsgemäße Verfahren zur Abgasnachbehandlung einer mit Erdgas betriebenen Brennkraftmaschine mit einer Abgasanlage, welche einen Katalysator oder ein Katalysatorsystem aufweist, umfasst eine Beheizung zumindest eines Katalysators bei einer Temperatur Tᵢₛₜ des Katalysators oder des Katalysatorsystems unterhalb einer Mindesttemperatur Tₛₒₗₗ mittels einer Momentenreserve der Brennkraftmaschine. Die Momentenreserve wird erfindungsgemäß aus einer Temperaturdifferenz ΔT zwischen einer ermittelten aktuellen Temperatur Tᵢₛₜ des Katalysators oder des Katalysatorsystems und einer Mindesttemperatur Tₛₒₗₗ des Katalysators oder des Katalysatorsystems ermittelt,

Vorzugsweise wird die Mindesttemperatur Tₛₒₗₗ aus einem Abgasmassenstrom und zumindest einem Alterungsparameter des Katalysators ermittelt. Es versteht sich, dass die Mindesttemperatur auch auf ändere Weise ermittelt werden kann.

Dabei wird vorzugsweise nach einem erstmaligen Light-off des Katalysators oder des Katalysatorsystems bei einem Absinken einer Katalysatortemperatur unter eine, für eine ausreichende Methankonvertierung notwendige Mindesttemperatur Tₛₒₗₗ eine Momentenreserve für eine Beheizung zumindest eines Katalysators ermittelt und zumindest temporär zur Verfügung gestellt.

Die erfindungsgemäße Vorrichtung zur Abgasnachbehandlung einer mit Erdgas betriebenen Brennkraftmaschine umfasst eine Abgasanlage, welche zuminc est einen Katalysator oder ein Katalysatorsystem sowie Mittel zur Erfassung eines Abgasmassenstroms und einer aktuellen Temperatur Tᵢₛₜ des Katalysators aufweist, und zumindest eine ersten Einheit zur Ermittlung einer Mindesttemperatur Tₛₒₗₗ für eine Methankonvertierung des Katalysators aus dem erfassten Abgasmassenstrom und zumindest einen ermittelten Alterungsparameter des Katalysators sowie zumindest eine zweite Einheit zur Ermittlung einer Momentenreserve der Brennkraftmaschine - zum Beheizen des Katalysators bei einer Katalysatortemperatur unterhalb der Mindesttemperatur Tₛₒₗₗ - aus einer Temperaturdifferenz ΔT zwischen der aktuellen Temperatur Tᵢₛₜ und der Mindesttemperatur Tₛₒₗₗ des Katalysators.

Mit dem erfindungsgemäßen Verfahren und der erfindungsgemäßen Vorrichtung wird, Insbesondere in Schwachiastphasen der CNG-Brennkraftmaschine, zumindest ein Absinken der Katalysatortemperatur unter eine für eine ausreichende Methankonvertierung notwendige Mindesttemperatur Tₛₒₗₗ verhindert und die zum Beheizen benötigte Momentenreserve an den tatsächlichen Bedarf unter Berücksichtigung des aktuellen Alterungszustand des Katalysators angepasst.

Die Mindesttemperatur Tₛₒₗₗ liegt nach der Startphase und einern erstmaligen Light-Off des Katalysators vorzugsweise im Bereich einer Temperatur des Katalysators unter Berücksichtigung seines Alterungszustandes, bei welcher zumindest 50 % des im Abgas enthaltenen Methans konvertiert werden, bevorzugt bei einer Temperatur, bei welcher zumindest 90 % des im Abgas enthaltenen Methans konvertiert werden.

Beispielsweise beträgt Tₛₒₗₗ ≥ 350 °C bei noch nicht gealtertem Katalysator und einer 50 %igen Methankonvertierung, wobei sich mit zunehmender Alterung des Katalysators die Mindesttemperatur Tₛₒₗₗ erhöht, und Tₛₒₗₗ ≥ 600 °C bei gealtertem Katalysator und einer 90 %igen Methankonvertierung.

Besondere Vorteile ergeben sich durch die Möglichkeit der Verwendung von Katalysatoren mit erheblich reduziertem Edelmetallgehalt.

In einer besonders vorteilhaften Ausgestaltung der Erfindung kann der Edelmetallgehalt zumindest eines ersten Katalysators, vorzugsweise eines Vorkatalysators, auf ≤ 100 g/ft³, vorzugsweise ≤ 80 g/ft³ und besonders bevorzugt s 60 g/ft³ und/oder der Edelmetallgehalt zumindest eines, dem ersten Katalysator nach geordneten Katalysators auf ≤ 60 g/ft³, vorzugsweise s 40 g/ft³ und besonders bevorzugt ≤ 20 g/ft³ abgesenkt werden, ohne dass nach einer Ofenalterung des Katalysators oder des Katalysatorsystems für 4 Stunden bei 1100°C in Atmosphäre mit 2% O₂ und 10% H₂O in demselben Fahrzeug und Anwendung des vorstehenden Verfahrens im NEFZ eine HC-Emission von 0,1 g/km und eine NOₓ-Emission von 0,08 g/km überschritten wird.

Vorzugsweise erfolgt außerdem eine Aufheizting zumindest eines Katalysators oder des Katalysatorsystems in einer Startphase der Brennkraftmaschine mittels motorischer Maßnahmen auf eine Light-off-Temperatur. Als Light-off-Temperatur wird dabei eine Temperatur definiert bei welcher mindestens 50 % des im Abgas enthaltenen Methans konvertiert werden.

Eine ebenfalls an den Bedarf und den Alterungszustand des Katalysators oder Katalysatorsystems angepasste Aufheizung eines Katalysators oder eines Katalysatorsystems in einer Startphase der CNG-Brennkraftmaschine ist in einer weiteren vorteilhaften Ausgestaltung der Erfindung realisierbar, wenn in der Startphase der Brennkraftmaschine aus einem Abgasmassenstrom und zumindest einem ermittelten Alterungsparameter zumindest eines Katalysators die Light-off-Temperatur zum Anspringen der Methankonvertierung des Katalysators ermittelt wird und aus der ermittelten Light-off-Temperatur eine Momentenreserve der Brennkraftmaschine zur Aufheizung des zumindest einen Katalysators ermittelt wird.

Es liegt ebenso im Rahmen dieser Erfindung, wenn eine Aufheizung zumindest eines Katalysators oder des Katalysatorsystems in der Startphase der Brennkraftmaschine mit an sich bekannten Mitteln realisiert wird.

In einer vorteilhaften Ausgestaltung der Erfindung können Werte für Alterungsparameter durch Auswertung einer Speicherfähigkeit des Katalysators bezüglich zumindest einer Schadstoffkomponente, insbesondere eine NOx-Speicherfähigkeit und/oder eine O₂ - Speicherfähigkeit des Katalysators in an sich bekannter Weise ermittelt werden.

Der oder die ermittelten Werte für Afterungsparameter des Katalysators sowie der ermittelte Abgasmassenstrom und die aktuelle Katalysatortemperatur Tᵢₛₜ werden vorzugsweise in einem Speicher einer Steuereinheit der Brennkraftmaschine abgelegt und/oder gespeichert, sodass diese für eine Ermittlung der Momentenreserve zur Verfügung stehen.

In einer weiteren vorteilhaften Ausgestaltung der Erfindung wird zumindest ein Wert eines Alterungsparameters zumindest eines Katalysators Im Rahmen einer On-Board-Diagnose, bei welcher eine Überwachung abgasrelevanten Komponenten und/Oder Systeme, insbesondere des Katalysators erfolgt, ermittelt. Damit können im Rahmen einer On-Board-Diagnose des Katalysators ermittelte Parameter gleichzeitig für die Ermittlung der Momentenreserve verwendet werden, sodass keine zusätzlichen Sensoren oder Komponenten zur Ermittlung von Alterungsparametern erforderlich sind.

Alternativ oder zusätzlich wird zumindest ein Alterungsparameter des Katalysators vorzugsweise aus einem Modell des Katalysators mit einer Parameterkorrektur, welche die Alterung des Katalysators berücksichtigt, ermittelt. Ein derartiges Modell kann vorzugsweise als Komponente der Steuereinheit ausgebildet sein.

Da eine wirksame Methankonvertierung an einem der Katalysatoren eines Katalysatorsystems ausreicht, wird bei einer Ermittlung von mehreren Momentenreserven zur Beheizung mehrerer Katalysatoren vorzugsweise eine Minimalauswahl der geforderten Momentenreserve durchgeführt, so dass die verbrauchssteigemden Momenteneingriffe begrenzt werden können. Eine Minimalauswahl erfolgt vorzugsweise durch einen Größenvergleich der ermittelten Momentenreserven und eine Auswahl der kleinsten ermittelten Momentenreserve.

Die Momentenreserve wird vorzugsweise durch eine Entdrosselung des Motors und/oder durch eine Zündwinkelverschiebung in Richtung spät zur Verfügung gestellt. Damit sinkt zwar der Wirkungsgrad der Brennkraftmaschine und die Abgastemperatur und der Verbrauch steigen an, jedoch können diese Nachteile auf ein minimales notwendiges Maß reduziert werden.

Die Erfindung wird im folgenden an Hand eines Ausführungsbeispiels näher beschrieben. Es zeigt dazu :

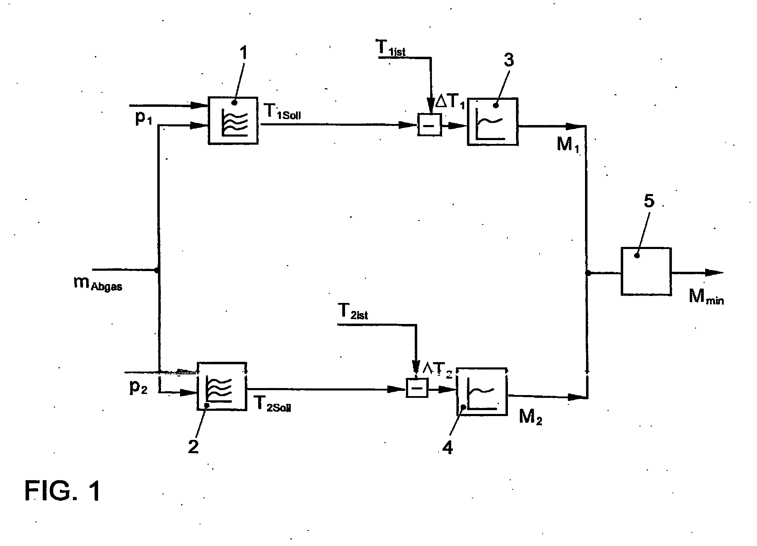

- Figur 1:: eine schematische Darstellung der Ermittlung einer geforderten Momentenreserve zur Beheizung eines Katalysatorsystems

Die beispielhafte Vorrichtung zur Abgasnachbehandlung einer CNG-Brennkraftmaschine mit einem Hubvolumen zwischen 1,0 und 2,5 Liter umfasst eine Abgasanlage mit einem Vorkatalysator und einem Hauptkatalysator.

Der Hauptkatalysator kann direkt hinter dm Vorkatalysator angeordnet sein.
Vorzugsweise ist er jedoch im Unterboden angeordnet. Hierdurch wird er nicht mit extrem hohen Temperaturen beaufschlagt (typischerweise < 900°C), wodurch eine niedrige Edelmetallbeladung möglich ist, für CNN-Motoren typischerweise <=100g/ft³, bevorzugt<=80g/ft³, besonders bevorzugt <=60g/ft³. Da die hauptsächliche Konvertierung für HC und CO bereits auf dem Vorkatalysator erfolgt, kann der Edelmetallanteil Palladium auf dem UB-Kat reduziert werden. Für die NOx-Konvertierung auf dem UB-Kat ist maßgeblich das Edelmetall Rhodium zuständig.

Der UB-Kat hat typischerweise ein Volumen ca. 0,5L < 0,7L < 1,5L - typisch sind Volumina von ca. 0,7L bei Zellzahlen typisch im Bereich 300cpsi bis 900cpsi.

Der Vorkatalysator ist motomah angeordnet, vorzugsweise direkt nach dem Krümmer der Brennkraftmaschine positioniert oder alternativ bei einer aufgeladenen Brennkraftmaschine direkt stromab eines Abgasturboladers positioniert. Um eine schnelle Aufheizung des Vorkatalysators zu erreichen wird dieser relativ klein gehalten und das Volumen des Vorkatalysators beträgt vorzugsweise weniger als 1 Liter, bevorzugt weniger als 0,7 Liter und besonders bevorzugt 0,5 Liter bei einer Edelmetallbeladung des Vorkatalysators von weniger als 80 g/ft³ und bei Zellzahlen im Bereich von 300 cpsi bis 900 cpsl.

Der Hauptkatalysator kann direkt hinter dem Vorkatalysator angeordnet sein oder ist vorzugsweise im Unterboden eines mit der Brennkraftmaschine betriebenen Fahrzeugs angeordnet.

Über eine Steuereinheit der CNG-Brennkraftmaschine erfolgt eine Aufheizung des Vorkatalysators und/oder des Hauptkatalysators mittels motorischer Maßnahmen auf eine Light-off-Temperatur von ca. 400°C bis ca. 450 °C - in Abhängigkeit von der Katalysatoralterung - zur Methankonvertierung bei einem Kaltstart der Brennkraftmaschine als auch eine Beheizung des Vorkatalysators bei einem Absinken der Katalysatortemperatur unter eine Mindesttemperatur T₁ₛₒₗₗ von ca. 380°C bis ca. 400°C - in Abhängigkeit von der Katalysatoralterung - und/oder des Hauptkatalysators bei einem Absinken der Katalysatortemperatur unter eine Mindesttemperatur T₂ₛₒₗₗ von ca. 350°C bis ca. 380°C - in Abhängigkeit von der Katalysatoralterung. Dabei verschieben sich mit zunehmender Katalysatoralterung die Temperaturen in Richtung der höheren Temperaturangaben.

Figur 1 zeigt eine schematische Darstellung der Ermittlung eines. Wertes für eine erforderliche Momentenreserve, welcher an die Steuereinheit zur Ausführung der Beheizung des Katalysatorsystems aus einem Vorkatalysator und einem Hauptkatalysator mittels motorischer Maßnahmen weitergeleitet wird.

Aus der Sauerstoffspeicherfähigkeit des Vorkatalysators wird ein Alterungsparameter p₁ für den Vorkatalysator und aus der Sauerstoffspeicherfähigkeit des Hauptkatalysators wird eine Alterungsparameter p₂ des Hauptkatalysators ermittelt.

Der mittels eines im Abgasstrang angeordneten Massenstrommessers erfasste Abgasmassenstrom m_{Abgas} und der Alterungsparameter p₁ werden der ersten Einheit zur Ermittlung einer Vorkatalysator-Mindesttemperatur 1 zugeführt. Außerdem werden der Abgasmassenstrom m_{Abgas} und der Alterungsparameter p₂ der ersten Einheit zur Ermittlung einer Hauptkatalysator-Mindesttemperatur 2 zugeführt.

In der ersten Einheiten zur Ermittlung einer Vorkatalysator-Mindesttemperatur 1 ist ein Kennlinienfeld abgelegt aus dem eine vom Alterungszustand des Vorkatalysators abhängige und für die Methankonvertierung notwendige Mindesttemperatur T₁ₛₒₗₗ für den Vorkatalysator ermittelt wird. In der ersten Einheit zur Ermittlung einer Hauptkatalysator-Mindesttemperatur 2 ist ein weiteres Kennlinienfeld abgelegt aus dem eine vom Alterungszustand des Hauptkatalysators und für die Methankonvertierung notwendige Mindesttemperatur T₂ₛₒₗₗ für den Hauptkatalysator ermittelt wird.

Aus der ermittelten Mindesttemperatur T₁ₛₒₗₗ für den Vorkatalysator und der aktuell gemessenen Temperatur des Vorkatalysators T₁ᵢₛₜ wird die Temperaturdifferenz ΔT₁= T₁ᵢₛₜ - T₁ₛₒₗₗ gebildet. Bei ΔT₁ ≤ 0 wird in der zweiten Einheit zur Ermittlung der Momentenreserve für die Beheizung des Vorkatalysators 3 aus einer Kennlinie ein Wert für eine Momentenreserve M₁ ermittelt, die ausreichend ist, um ein Abfallen der Temperatur des Vorkatalysators unter die Mindesttemperatur T₁ₛₒₗₗ zu verhindern.

In analoger Weise wird in der zweiten Einheit zur Ermittlung der Momentenreserve für die Beheizung des Hauptkatalysators 4 aus einer Kennlinie in Abhangigkeit von ΔT₂ ein Wert für eine Momentenreserve M₂ ermittelt, die ausreichend ist, um ein Abfallen der Temperatur des Hauptkatalysators unter die Mindesttemperatur T₂ₛₒₗₗ zu verhindern.

Alternativ dazu ist es auch möglich, die aktuellen Temperaturen T₁ᵢₛₜ und T₂ᵢₛₜ aus entsprechenden Katalysatormodellen zu ermitteln.

Anschließend erfolgt ein Vergleich der Momentenreserven M₁ und M₂ in der Einheit zur Minimalauswahl der Momentenreserve 5, so dass eine minima benötigte Momentenreserve durch motorische Maßnahmen zur Verfügung gestellt werden kann. Die geforderte minimale Momentenreserve wird, ggf. gefiltert oder mit Totzeitgliedem vorsehen, an die Steuereinheit der Brennkraftmaschine weitergegeben.

Die Momentenreserve wird durch eine Entdrosselung des Motors in Verbindung mit einer Zündwinkelverschiebung in Richtung spät zur Verfügung geste It. Aus diesen Maßnahmen resultiert eine Steigerung der Abgastemperatur und damit ein Anheben der Katalysatortemperaturen.

### Bezugszeichenliste

- 1: erste Einheit zur Ermittlung einer Vorkatalysator-Mindesttemperatur T₁ₛₒₗₗ
- 2: erste Einheit zur Ermittlung einer Hauptkatalysator-Mindesttemperatur T₂ₛₒₗₗ
- 3: zweite Einheit zur Ermittlung der Momentenreserve für die Beheizung des Vorkatalysators
- 4: zweite Einheit zur Ermittlung der Momentenreserve für die Beheizung des' Hauptkatalysator
- 5: Minimalauswahl Momentenreserve
- m_{abgas}: Abgasmassenstrom
- p₁: Alterungsparameter Vorkatalysator
- p₂: Alterungsparameter Hauptkatalysator
- T₁ₛₒₗₗ: Mindesttemperatur Vorkatalysator
- T₂ₛₒₗₗ: Mindesttemperatur Hauptkatalysator
- T₁ᵢₛₜ: aktuelle Temperatur Vorkatalysator
- T₂ᵢₛₜ: aktuelle Temperatur Hauptkatalysator
- ΔT₁: Temperaturdifferenz Vorkatalysator
- ΔT₂: Temperaturdifferenz Hauptkatalysator
- M₁: Momentenreserve Beheizung Vorkatalysator
- M₂: Momentenreserve Beheizung Hauptkatalysator

## Patentansprüche

1. Verfahren zur Abgasnachbehandlung einer mit Erdgas betriebenen Brennkraftmaschine mit einer Abgasanlage, welche einen Katalysator oder ein Katalysatorsystem aufweist, **dadurch gekennzeichnet, dass** eine Mindesttemperatur Tₛₒₗₗ für eine vorgegebene Methankonvertierung für zumindest einen Katalysator ermittelt wird, eine Temperatur Tᵢₛₜ des Katalysators ermittelt wird und bei einer Temperatur Tᵢₛₜ unterhalb der Mindesttemperatur Tₛₒₗₗ aus der Temperaturdifferenz ΔT zwischen der Temperatur Tᵢₛₜ und der Mindesttemperatur Tₛₒₗₗ eine Momentenreserve der Brennkraftmaschine zur zumindest temporären Beheizung des zumindest einen Katalysators ermittelt und gegebenenfalls zur Verfügung gestellt wird.

2. Verfahren nach Anspruch 1, **dadurch gekennzeichnet, dass** eine Momentenreserve zum Beheizen eines Vorkatalysator ermittelt wird.

3. Verfahren nach einem der vorhergehenden Ansprüche, **dadurch gekennzeichnet, dass** eine Momentenreserve zum Beheizen eines Hauptkatalysator ermittelt wird.

4. Verfahren nach Anspruch 2 und 3, **dadurch gekennzeichnet, dass** eine Minimalauswahl der Momentenreserven erfolgt und eine minimale Momentenreserve zum Beheizen zur Verfügung gestellt wird.

5. Verfahren nach einem der vorhergehenden Ansprüche, **dadurch gekennzeichnet, dass** die Mindesttemperatur Tₛₒₗₗ aus einem Abgasmassenstrom und einem Alterungsparameter des Katalysators ermittelt wird.

6. Verfahren nach einem der vorhergehenden Ansprüche, **dadurch gekennzeichnet, dass** In einer Startphase der Brennkraftmaschine eine Aufheizung zumindest eines Katalysators auf eine Light-off-Temperatur zur Methankonvertierung mittels motorischer Maßnahmen durchgeführt wird.

7. Verfahren nach Anspruch 6, **dadurch gekennzeichnet, dass** in der Startphase der Brennkraftmaschine aus einem Abgasmassenstrom und zumindest einem Alterungsparameter zumindest eines Katalysators die Light-off-Temperatur des Katalysators ermittelt wird und aus der ermittelten Light-off-Temperatur eine Momentenreserve der Brennkraftmaschine zur Aufheizung des zumindest einen Katalysators ermittelt wird.

8. Verfahren nach einem der vorhergehenden Ansprüche, **dadurch gekennzeichnet, dass** der Wert zumindest eines Alterungsparameters des Katalysators durch eine On-Board-Diagnose des Katalysators ermittelt wird.

9. Verfahren nach einem der vorhergehenden Ansprüche, **dadurch gekennzeichnet, dass** der Wert zumindest eines Alterungsparameters des Katalysators aus einem Modell des Katalysators ermittelt wird.

10. Verfahren nach einem der vorhergehenden Ansprüche, **dadurch gekennzeichnet, dass** als Alterungsparameter die Speicherfähigkeit des Katalysaters bezüglich zumindest einer Schadstoffkomponente verwendet wird.

11. Verfahren nach Anspruch 8, **dadurch gekennzeichnet, dass** als Alterungsparameter eine NOx-Speicherfähigkeit und/oder eine O₂-Speicherfähigkeit des Katalysators verwendet wird.

12. Verfahren nach einem der vorhergehenden Ansprüche, **dadurch gekennzeichnet, dass** die Mindesttemperatur Tsoll aus einem Kennlinienfeld zumindest eines Alterungsparameters und des Abgasmassenstroms ermittelt wird.

13. Verfahren nach einem der vorhergehenden Ansprüche, **dadurch gekennzeichnet, dass** die Momentenreserve durch eine Entdrosselung der Brennkraftmaschlne zur Verfügung gestellt wird.

14. Verfahren nach einem der vorhergehenden Ansprüche, **dadurch gekennzeichnet, dass** die Momentenreserve durch eine Zündwinkelverschiebung it Richtung spät zur Verfügung gestellt wird.

15. Vorrichtung zur Abgasnachbehandlung einer mit Erdgas getriebenen Brennkraftmaschine umfassend eine Abgasanlage, welche zumindest einen Katalysator oder ein Katalysatorsystem aufweist, **dadurch gekennzeichnet, dass**
- zumindest eine erste Einheit (1, 2) zur Ermittlung eine Mindesttemperatur Tₛₒₗₗ für eine ausreichende Methankonvertierung zumindest eines katalysators aus dem erfassten Abgasmassenstrom und dem zumindest einen Alterungsparameter und
- zumindest eine zweite Einheit (3, 4) zur Ermittlung einer Momentenreserve der Brennkraftmaschine - zum Beheizen des Katalysators oder des Katalysatorsystems bei einer Temperatur Tᵢₛₜ des Katalysators oder des Katalysatorsystems unterhalb der Mindesttemperatur Tₛₒₗₗ - aus einer Temperaturdifferenz ΔT zwischen der Temperatur T₁ₛₜ und der Mindesttemperatur Tₛₒₗₗ des Katalysators vorgesehen ist.

16. Vorrichtung nach Anspruch 14, **dadurch gekennzeichnet, dass** diese zur Ermittlung jeweils einer Momentenreserve zum Beheizung eines Verkatalysators und/oder eines Hauptkatalysators ausgelegt ist.

17. Vorrichtung nach Anspruch 14 oder 15, **dadurch gekennzeichnet, dass** diese zur Ermittlung jeweils einer Momentenreserve zur Beheizung weiterer Katalysatoren ausgelegt ist.

18. Vorrichtung nach einem der vorhergehenden Ansprüche 14 bis 16, **dadurch gekennzeichnet, dass** eine dritte Einheit (5) zur Auswahl einer minimalen Momentenreserve aus zumindest zwei ermittelten Momentenreserven vorgesehen ist.

19. Vorrichtung nach einem der vorhergehenden Ansprüche 14 bis 17, **dadurch gekennzeichnet, dass** die ersten Einheiten (1, 2) und/oder die zweiten Einheiten (3,4) und/oder die dritte Einheit (5) mit einer Steuereinheit der Brennkraftmaschine in Verbindung stehen.

20. Vorrichtung nach einem der vorhergehenden Ansprüche 15 bis 19, **dadurch gekennzeichnet, dass** die Abgasanlage Mittel zur Erfassung eines Abgasmassenstroms, zumindest eines Alterungsparameters des Katalysators oder des Katalysatorsystems und einer Temperatur Tᵢₛₜ des Katalysators oder des Katalysatorsystems aufweist.

21. Vorrichtung nach einem der vorhergehenden Ansprüche 15 bis 20, **dadurch gekennzeichnet, dass** der Edelmetallgehalt zumindest eines ersten Katalysators ≤ 100 g/ft³, vorzugsweise ≤ 80 g/ft³ und besonders bevorzugt s 60 g/ft³ beträgt.

22. Vorrichtung nach Anspruch 21, **dadurch gekennzeichnet, dass** der Edelmetallgehalt zumindest eines, dem ersten Katalysator nach geordneten Katalysators s 60 g/ft³, vorzugsweise ≤ 40 g/ft³ und besonders bevorzugt ≤ 20 g/ft³ beträgt.
